# DEMANDE DE BREVET EUROPEEN

(11) **EP 1 550 578 A2**
(43) Date de publication de la demande: **06.07.2005**
(21) Numéro de dépôt: 04106717.4
(22) Date de dépôt: 20.12.2004
(51) Int. Cl.: B60Q 1/42

(54) **Dispositif de déclenchement pour un système de clignotants d'un véhicule**

(30) Priorité: 30.12.2003 IT TO20031049
(71) Demandeur: Valeo Cablaggi e Commutazione S.r.l., 15023 Felizzano (Alessandria) (IT)
(72) Inventeur: Canevaro, Pietro, 15026, Oviglio (Alessandria) (IT)
(74) Mandataire: Croonenbroek, Thomas

(57) **Abrégé**

Un dispositif de déclenchement (1) pour un système de clignotants d'un véhicule présente un élément de déclenchement (10) réalisé en une seule pièce en matière plastique et doté de deux portions à anneau (11, 12), lesquelles peuvent être montées dans des positions coaxiales entre elles et présentent des dents respectives (15, 16) radiales extérieures, en mesure de coopérer avec un groupe de braquage pour tourner, en cours d'utilisation, les portions à anneau (11, 12) et provoquer le retour d'un levier de sélection du système de clignotants vers une position neutre ; l'élément de déclenchement (10) est doté, en outre, d'une portion élastiquement déformable (24) à fleur, dont les extrémités (25, 26) se terminent, chacune, sur la dent (15, 16) d'une portion correspondante à anneau (11, 12) ; la section transversale de la portion élastiquement déformable (24) est variable progressivement entre ces extrémités (25, 26).

## Description

La présente invention concerne un dispositif de déclenchement pour un système de clignotants d'un véhicule.

Comme on le sait, les véhicules sont dotés d'un système de clignotants, associé au groupe de braquage du véhicule et comprenant un levier de sélection, qui peut être actionné manuellement par le conducteur, en faisant tourner le levier lui-même à partir d'une position neutre dans le sens des aiguilles d'une montre ou bien dans le sens contraire, afin de commander l'allumage des indicateurs de direction et donc de signaler l'intention d'un changement de direction à droite ou bien, respectivement, à gauche.

Une fois que le conducteur a terminé ce changement de direction, le levier de sélection revient automatiquement dans sa position neutre, par l'effet d'un dispositif de déclenchement accouplé audit levier de sélection et actionné par la rotation de la colonne du groupe de braquage. En particulier, on connaît un dispositif de déclenchement comprenant deux éléments à anneau distincts, qui sont articulés à une structure de support dans des positions coaxiales, autour d'un axe parallèle à l'axe de la colonne, qui sont reliés entre eux par un élément élastique à fleur réalisé en matière métallique et qui sont dotés de dents respectives, qui ressortent à travers la structure de support, afin d'interagir avec des reliefs radiaux de la colonne, pendant la rotation de ce dernier autour de son propre axe.

Les solutions connues du type décrit ci-dessus sont rarement satisfaisantes, puisqu'il s'avère particulièrement complexe d'accoupler, de façon stable et avec précision, l'élément élastique à fleur aux deux éléments à anneau.

En effet, les dimensions des éléments du dispositif de déclenchement sont relativement petites, c'est pourquoi il est tout aussi complexe de maintenir l'élément élastique à fleur, dans la position de référence fixe tandis que les deux éléments à anneau sont reliés ou co-estampés à l'élément élastique lui-même. En cas d'imprécisions de positionnement, le branchement est imprécis, ce qui implique des risques élevés consécutifs de désaccouplage entre les éléments à anneau et l'élément élastique à fleur.

Ces risques de désaccouplage sont ensuite accentués par le fait que le dispositif de déclenchement, en cours d'utilisation, est soumis à une inévitable usure, à des poussées relativement élevées entre les saillies de la colonne et le levier de sélection et, parfois, à des contraintes dues à un choc ou à des forçages, lors du braquage.

En outre, le dispositif de déclenchement présente un nombre relativement élevé de composants et donc exige des temps et des coûts relativement importants pour sa réalisation.

Le but de la présente invention consiste à réaliser un dispositif de déclenchement pour un système de clignotants d'un véhicule, qui permette de résoudre, de façon simple et économique, les problèmes exposés ci-dessus.

Selon la présente invention, un dispositif de déclenchement est réalisé pour un système de clignotants d'un véhicule, le dispositif de déclenchement comprenant :
- une première et une seconde portions à anneau, en mesure d'être montées dans des positions coaxiales entre elles et comprenant des dents radiales respectives externes, en mesure de coopérer avec un groupe de braquage afin de tourner, en cours d'utilisation, lesdites portions à anneau et de provoquer le retour d'un levier de sélection dudit système de clignotants vers une position neutre ; et
- une portion élastiquement déformable ayant deux extrémités opposées accouplées, respectivement, auxdites première et seconde portions à anneau ;
caractérisé par le fait que lesdites première et seconde portions à anneau et ladite portion élastiquement déformable font partie d'un seul élément de déclenchement réalisé en une seule pièce.

L'invention sera maintenant décrite en se référant aux dessins annexes, qui en illustrent un exemple de mise en oeuvre non limitatif, dans lequel :
La figure 1 est une vue en perspective d'une forme préférée de mise en oeuvre du dispositif de déclenchement pour un système de clignotants d'un véhicule, réalisé selon la présente invention et montré dans une configuration opérationnelle, dans laquelle il présente une portion élastiquement déformée ; et
La figure 2 est une vue en perspective qui montre le dispositif de la figure 1 sur une échelle agrandie et dans une configuration de repos non déformée ; et
La figure 3 est analogue à la figure 1 et montre le dispositif de déclenchement sur une échelle agrandie et d'un point de vue différent.

Sur les figures jointes, on indique par 1 un dispositif de déclenchement pour un système de clignotants d'un véhicule, lequel est porté par une structure 2 (partiellement illustrée) comprenant une plaque 3 et une portion 4 tubulaire, perpendiculaire à la plaque 3 et définissant un siège 5 cylindrique. Le siège 5 comprend une colonne 6 (dont on indique uniquement une trace schématique), laquelle est partie intégrante d'un groupe de braquage du véhicule, présente un axe 7, est coaxiale au siège 5, tourne autour dudit axe 7 sous l'action d'un volant de braquage (non illustré) et est dotée de saillies radiales ou d'autres organes d'assemblage (non illustrés), en mesure de coopérer avec le dispositif 1 pendant la rotation.

Le système de clignotants comprend un levier de sélection (non illustré), qui est accouplé à la structure 2 et tourne autour d'un axe (non illustré) sensiblement parallèle à l'axe 7, dans le sens des aiguilles d'une montre ou dans le sens contraire, à partir d'une position neutre centrale de zéro ou de référence, afin de commander l'allumage des indicateurs de direction du véhicule et de signaler l'intention du conducteur de changer de direction à droite, ou, respectivement, à gauche.

Le levier de sélection, en cours d'utilisation, revient automatiquement dans la position neutre sous l'action du dispositif 1, qui est intercalé entre la colonne 6 et le levier de sélection et comprend un élément 10 de déclenchement réalisé en un seul morceau par estampage de matière plastique.

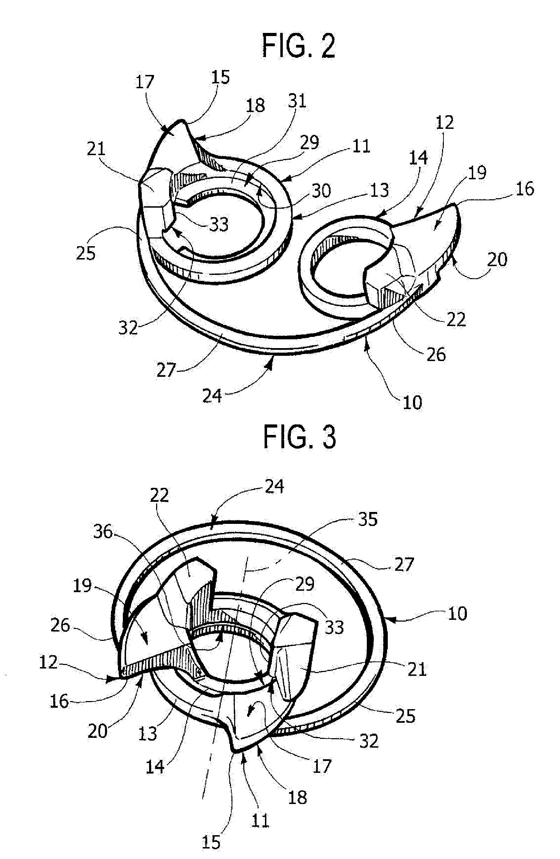

En se référant à la figure 2, l'élément 10 comprend deux portions 11, 12 à anneau, en mesure d'être montées dans des positions coaxiales entre elles, et comprenant des anneaux respectifs 13, 14 circulaires et des dents respectives 15, 16, lesquelles saillent radialement vers l'extérieur des anneaux 13, 14. Les dents 15, 16 présentent une forme en plaque aplatie, dans une direction parallèle aux axes des anneaux 13, 14, elles gisent sur des plans différents entre elles et différents par rapport à celles des anneaux correspondants 13, 14, et sont définies axialement, chacune, par une paire correspondante de faces, indiquées par les numéros de référence 17, 18 pour la dent 15, et 19, 20 pour la dent 16. Des faces 17, 19 ressortent des reliefs respectifs 21, 22 axiaux, qui sont réalisés en une seule pièce avec l'élément 10 et sont accouplés, en cours d'utilisation, avec le levier de sélection, de façon non décrite en détail.

L'élément 10 comprend, en outre, une portion 24 allongée, qui est élastiquement déformable, qui joint entre elles les portions 11, 12, est définie, en particulier, par une portion à fleur, à section quadrangulaire, présente une évolution curviligne avec des concavités orientées vers les portions 11, 12 et comprend deux extrémités 25, 26 opposées, qui se terminent sur les faces 18 et, respectivement, 20.

La portion 24 présente une section transversale, variable sur toute sa longueur. Cette section transversale, en particulier, se réduit progressivement et de manière symétrique, à partir d'une zone centrale 27 de la portion 24 vers les extrémités 25, 26.

L'anneau 13 présente un logement 29 circulaire coaxial, qui est délimité par une superficie 30 latérale cylindrique complémentaire à l'anneau 14, par une base 31 s'étendant en arc, le long de la superficie 30, pour l'appui axial dudit anneau 14 et par un épaulement 32 de rétention axiale faisant face à la base 31, défini par une appendice 33 radiale interne de la saillie 21 et en mesure de retenir l'anneau 14 dans le logement 29.

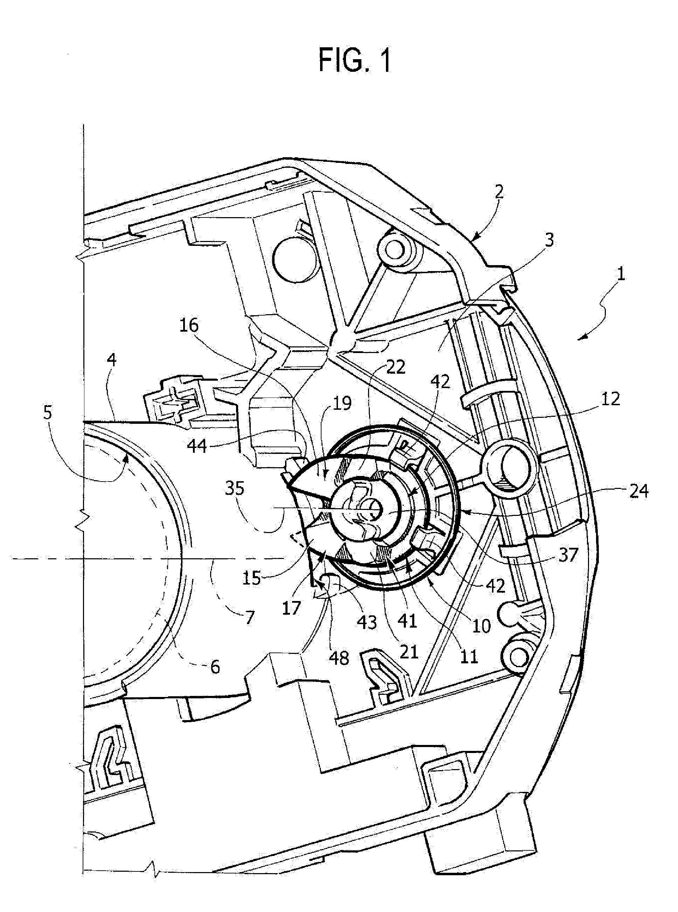

La forme des portions 13 et 14 est telle qu'elle permet l'insertion de l'anneau 14 dans le logement 29, après avoir déformé élastiquement la portion 24, afin d'obtenir la configuration opérationnelle montrée sur les figures 1 et 3. Dans cette configuration opérationnelle, les anneaux 13, 14 sont coaxiaux entre eux, le long d'un axe 35 et peuvent tourner autour de l'axe 35 lui-même, l'un par rapport à l'autre, contre l'action élastique de la portion 24. Toujours dans la configuration opérationnelle, le bord intérieur de la base 31 et la superficie interne de l'anneau 14 sont à fleur entre eux et définissent, ensemble, une superficie 36 cylindrique, laquelle, pendant le montage, est calée sur un tourillon cylindrique 37 qui s'étend en saillie par rapport à la plaque 3 et est parallèle à l'axe 7.

En se référant à la figure 1, la plaque 3 présente, autour du tourillon 37, une piste 41 circulaire pour l'anneau 13, et porte intégralement deux ailettes 42 de rétention, lesquelles sont élastiquement déformables pour permettre la mise en place de l'anneau 14 dans la piste 41 et maintiennent axialement la portion 11 contre la plaque 3.

L'élément 10 est en mesure de tourner dans la piste 41 autour de l'axe 35, entre deux positions limites (dont une seule est illustrée), définies par des saillies respectives 43, 44, qui sont parties intégrantes de la structure 2 et sont en mesure de coopérer en butée contre les dents 15 et, respectivement, 16. Pendant le montage de l'élément 10 sur la plaque 3, les dents 15, 16 ressortent dans le logement 5 à travers une fente 48 ménagée à travers la portion 4 en position intermédiaire entre les saillies 43, 44, afin de permettre aux dents 15, 16 de coopérer, en cours d'utilisation, avec les reliefs de la colonne 6, pendant le mouvement rotatif de cette dernière, et de provoquer la rotation de l'élément 10 autour de l'axe 37 et donc la rotation de retour du levier de sélection vers sa position neutre, de façon non décrite en détail.

D'après ce qui précède, il semble évident que l'élément 10, étant réalisé en une seule pièce, ne présente aucun risque de désaccouplage, entre les portions 11, 12 et la portion 24 et, en outre, est relativement simple à réaliser, puisqu'une simple opération d'estampage de matière plastique est exigée et qu'il n'est pas nécessaire d'assembler ou d'ajouter d'autres composants pour obtenir le déclenchement automatique du levier de sélection.

La forme de la portion 24 et, en particulier, la variation de sa section transversale entre les extrémités 26, 27 permettent d'obtenir sensiblement les mêmes caractéristiques fonctionnelles que les dispositifs de déclenchement connus, munis d'un élément élastique à fleur métallique.

La forme des portions 11, 12 est telle qu'elle rend extrêmement simple l'insertion de l'anneau 14 dans le logement 29, en déformant élastiquement la portion 24 et qu'elle maintient stable l'accouplement entre les anneaux 13, 14.

D'après ce qui précède, il semble enfin évident qu'il est possible d'apporter des modifications et variantes qui ne sortent pas du domaine de protection de la présente invention à l'élément 10 décrit.

En particulier, la portion 24 élastiquement déformable pourrait présenter une forme différente, par exemple en lame, mais toujours de façon à permettre une rotation relative entre les portions 11, 12 quand ces dernières sont montées de manière coaxiale entre elles dans la configuration opérationnelle.

En outre, les anneaux 13, 14 pourraient présenter des dimensions sensiblement égales entre eux et/ou être accouplés entre eux différemment de ce qui est indiqué à titre d'exemple.

## Revendications

1. Dispositif de déclenchement (1) pour un système de clignotant d'un véhicule, le dispositif de déclenchement comprenant :
- une première (11) et une seconde (12) portions à anneau en mesure d'être montées dans des positions coaxiales entre elles et comprenant des dents respectives (15, 16) radiales externes susceptibles de coopérer avec un système de braquage pour tourner, en cours d'utilisation, lesdites portions à anneau (11, 12) et provoquer le retour d'un levier de sélection dudit système de clignotant vers une position neutre ; et
- une portion élastiquement déformable (24) ayant deux extrémités (25, 26) opposées, accouplées, respectivement, auxdites première (11) et seconde (12) portions à anneau ;
**caractérisé en ce que** lesdites première (11) et seconde (12) portions à anneau et ladite portion élastiquement déformable (24) font partie d'un seul élément de déclenchement (10) réalisé en une seule pièce.

2. Dispositif selon la revendication 1, **caractérisé en ce que** ledit élément de déclenchement (10) est réalisé en matière plastique.

3. Dispositif selon la revendication 1 ou 2, **caractérisé en ce que** ladite portion élastiquement déformable (24) présente une section transversale, variable sur toute sa longueur.

4. Dispositif selon la revendication 3, **caractérisé en ce que** la section transversale de ladite portion élastiquement déformable (24) se réduit progressivement d'une zone centrale (27) vers lesdites extrémités (25, 26).

5. Dispositif selon l'une quelconque des revendications précédentes, **caractérisé en ce que** lesdites dents radiales externes (15, 16) présentent une forme aplatie dans une direction parallèle à un axe desdites première et seconde portions à anneau (11, 12), et sont définies axialement, chacune, par une première face correspondante (17, 19) munie d'un relief axial (21, 22) et une seconde face correspondante (18, 20) sur laquelle se termine une extrémité correspondante (25, 26).

6. Dispositif selon l'une quelconque des revendications précédentes, **caractérisé en ce que** ladite première portion à anneau (11) définit un logement (29) dans lequel peut s'engager ladite seconde portion à anneau (12) et comprend des systèmes de retenue (32) permettant de retenir ladite seconde portion à anneau (14) en engagement dans ledit logement (29).

7. Dispositif selon les revendications 5 et 6, **caractérisé en ce que** le relief axial (21) de ladite première portion à anneau (11) comprend une appendice (33) radiale interne définissant lesdits systèmes de retenue (32).

8. Dispositif selon l'une quelconque des revendications précédentes, **caractérisé en ce que** ladite portion élastiquement déformable (24) est définie par une portion à fleur, ayant une section quadrangulaire.
